# EUROPEAN PATENT SPECIFICATION

(11) **EP 1 360 056 B1**
(45) Date of publication and mention of the grant of the patent: **15.12.2004**
(21) Application number: 02716168.6
(22) Date of filing: 25.01.2002
(51) Int. Cl.: B29C 45/46, B29C 45/27, B29C 45/70, B29C 45/02

(54) **METERING DEVICE FOR A PLASTICS MOULDING MACHINE**
DOSIERVORRICHTUNG FÜR EINE SPRITZGIESSMASCHINE FÜR KUNSTSTOFFE
DISPOSITIF DE DOSAGE POUR MACHINE A MOULER LES MATIERES PLASTIQUES

(30) Priority: 26.01.2001 GB 0102026
(43) Date of publication of application: 12.11.2003
(73) Proprietor: Im-Pak Technologies Limited, Petworth, Sussex GU2 9NR (GB)
(72) Inventor: CLARKE, Peter Reginald, Graffham Petworth, Sussex GU28 0NU (GB)
(74) Representative: Messulam, Alec Moses
(86) International application number: PCT/GB2002/000334
(87) International publication number: WO 2002/058908

(56) References cited:
- EP-A- 0 153 075
- DE-B- 1 174 491
- GB-A- 2 101 034
- US-A- 3 247 304
- US-A- 3 390 433
- US-A- 4 080 147
- US-A- 5 833 899
- PATENT ABSTRACTS OF JAPAN vol. 1996, no. 07, 31 July 1996 (1996-07-31) & JP 08 057927 A (JAPAN STEEL WORKS LTD:THE;NIKKO TOKKI KK), 5 March 1996 (1996-03-05)

## Description

The present invention relates to a metering device for use in a plastics injection moulding machine according to the pre-characterising part of claim 1.

A metering device of this kind is known from e.g. US-A-4 080 147.

An injection moulding machine conventionally comprises a mould made in separable parts which between them define a mould cavity having the desired shape of the finished article. With the mould closed, molten thermoplastic material is injected into the cavity and solidifies within the mould. The mould is then opened to allow the formed article to be ejected and the mould is again closed to allow the cycle to be repeated.

The molten thermoplastic material is formed by means of a screw. The raw thermoplastic material is fed in granular form into the screw from a hopper. The action of the rotation of the screw compress the granules as they are being heated to form the melt. The melt flows into a chamber lying ahead of a piston formed by the head of the screw. When the mould cavity is to be filled, the screw is moved axially so that the melt is injected by the piston under pressure through a feed gate, controlled by a gate valve, into the mould cavity.

No special metering device is required when forming articles in this way by injection moulding because the plastics melt is required to flow until the cavity is full. Once the cavity has been filled, the flow stops automatically on account of the back pressure that builds up in the mould cavity.

There are occasions, however, when it is not possible to rely on back pressure. It is instead necessary to meter a precise dose of the plastics melt to the mould cavity. One example of a process requiring the plastics material to be metered is when it is desired to form a foamed article. This can be achieved by injecting a thermoplastic material that contains a gas or another foaming agent so that the plastics material expands in the mould, to form an open or closed cell foam. In such a case, the volume of plastics material that is injected is much smaller than the total volume of the mould cavity and unless the plastics melt is accurately metered into the cavity, the density of the foam in the finished article will vary widely.

Another example of a process where back pressure cannot be relied upon to determine the quantity of the plastics melt injected into the mould cavity is described in a copending PCT application PCT/GB02/00306 (based on GB 0102026.2 filed on 26 January, 2001). In the latter application, a quantity of plastics material is injected into a mould while it is held closed only by a light force that cannot withstand the injection pressure. The injected plastics material once again does not meet with significant resistance during injection. After the required quantity of plastics material has been injected into the mould, the mould cavity is rapidly and forcefully reduced to its minimum volume to force the plastics material to fill the mould cavity completely, using an action similar to forging. In this process, metering the plastics material accurately is again important if one is to avoid production of defective articles.

Devices that may be used in an injection moulding machine to meter doses of a molten thermoplastic material into the mould cavity area known which first store a predetermined quantity of the molten plastics material in an auxiliary chamber and subsequently transfer the contents of the auxiliary chamber to the mould cavity. Examples of such metering devices are to be found, for example, in US Patents 3,247,307 and 3,390,433, DE 11 74 491, EP 0 153 075, GB 2 101 034, and JP 08 057927.

The prior art reference believed to be the most relevant to the present invention is believed to be US Patent 4 080 147. The latter patent discloses a metering device that forms part of a plastics moulding machine having mould cavities that are opened and closed by means of relatively movable platens and a means for feeding a plastics melt into the cavities. The metering device comprises a heated block interposed between the feeding means and the mould cavity, a cylinder formed in the block for each of the cavities and a single-acting piston reciprocably mounted in each cylinder. First passages formed in the block connect the cylinders to the feeding means, while second passages in the block connect each cylinder to the associated mould cavity. Valves in the passages enable the cylinders first to be filled with the desired dose of the plastics melt by the feeding means without the melt entering the mould cavities and subsequently enable the desired doses of plastics melt when ejected from the cylinders by the pistons to flow from the cylinders to the respective mould cavities without being returned to the feeding means.

A disadvantage of the metering device taught by the latter patent is that no provision is made for individual adjustment of the quantity of plastics material delivered to each cavity.

With a view to mitigating the foregoing disadvantage the present invention provides a metering device as hereinafter set forth in Claim 1 of the appended claims which differs from US-A-4 080 147, in that each piston is displaceable within the associated cylinder by means of a respective piston rod that protrudes from the heated block and in that an adjustable stop is provided for limiting the stroke of each piston to enable the quantity of the plastics melt injected into each cavity to be set independently of the other cavities.

Particular embodiments of the invention are the subject of the dependent claims.

Preferably, each piston is advanced into its cylinder by means of a respective hydraulic, pneumatic or electromechanical actuator.

Conveniently, the valves are constituted by a spool valve having a first position that allows communication only between the cylinder and the feeding means and a second position that allows communication only between the cylinder and the mould cavity.

The piston is preferably designed to reciprocate linearly but it is alternatively possible to use a vane that can rotate within an arcuate slot.

The invention will now be described further, by way of example, with reference to the accompanying drawings, in which :
Figure 1 is a schematic section through part of an injection moulding machine fitted with a metering device, and
Figures 2 and 3 are schematic representations of the gate valve used in the embodiment of Figure 1, each figure showing the valve spool in a different end position.

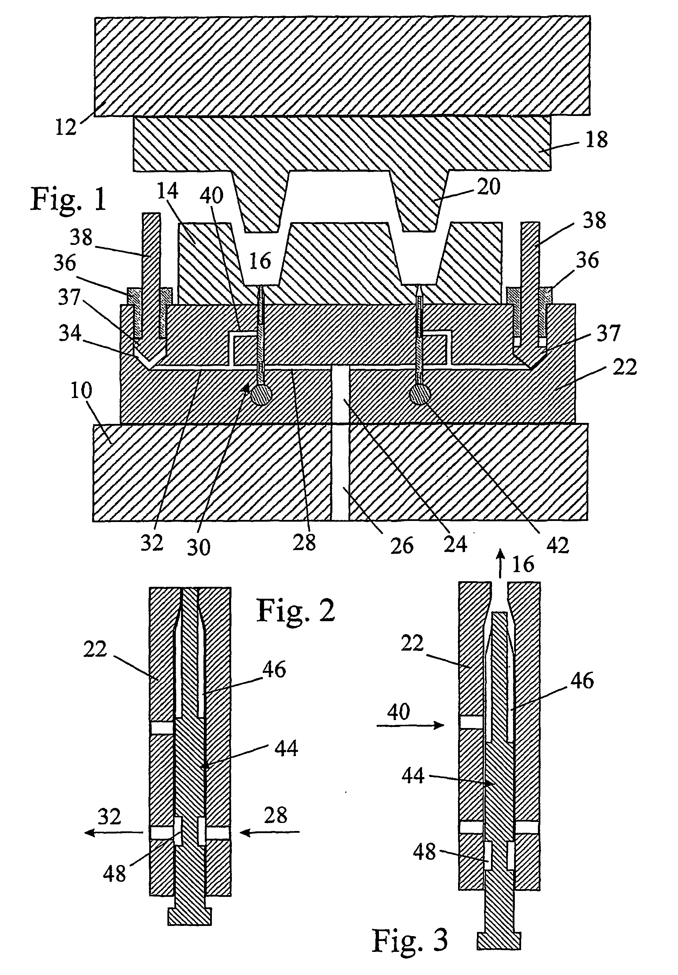

In Figure 1, there is shown an open mould arranged between the bulkhead 10 and the platen 12 of an injection moulding machine. The bulkhead is stationary 10 and is connected to a conventional screw (not shown) which melts and compresses thermoplastic material fed into it by a hopper and injects the molten plastics material into the mould through the passage 26 in the bulkhead 10.

The platen 12 is moved towards and away from the bulkhead 10, to open and close the mould, by a hydraulic ram that acts on the platen through a system of toggle levers. As the moulding machine is generally conventional and the invention is not restricted to any form of moulding machine, the machine will not itself be described in greater detail.

The illustrated mould is shown in its open position and is shown for simplicity to comprise only two parts, namely a stationary part 14 formed with depressions 16 and a moving part 18 formed with projecting cores 20 that fit into the depressions 16. When the mould is closed, a gap between the depressions 16 and the cores 20 constitutes the mould cavity which has the desired shape of the finished article, in this case a cup. The invention is equally applicable to more complex moulds have more that two relatively movable parts.

Everything described up to this point is conventional. In normal operation, the mould is closed, the cavities are filled to their maximum capacity and the plastics material is allowed to set. Thereafter, the mould is opened, the formed articles are rejected and new moulding cycle is started.

The problem that is addressed by the present invention occurs when the mould cavities do not need to be filled to the point where no more plastics material can be injected by the screw into the cavity. This situation arises, for example, when the article is to be formed of a foamed plastics material which increases in volume after it has been injected into the mould cavities. Another example where this arises is when the plastics material is injected into the mould while it is partly or fully opened, to be subsequently compressed by the closure of the mould. In such cases it is necessary to meter a precise dose of the plastics material into the mould cavity during each injection without relying on the pressure build up within the mould cavity to limit the quantity of the meld that is injected.

The metering device in Figure 1 comprises a block 22 that is arranged between the bulkhead 10 and the stationary part 14 of the mould. The block 22 is heated by means of heating elements that pass through it, in order the maintain the thermoplastic material in its molten state, and acts as a distribution manifold. In particular, the block 22 has a common passage 24 in communication with the passage 26 in the bulkhead 10 that leads to the screw and different runners 28 that lead from the common passage to the individual mould cavities.

Each cavity has a feed gate comprising a spool valve which is generally designated 30 and will be described in more detail below by reference to Figures 2 and 3. The spool valve acts to control the flow between the runner 28 and a conduit 32 that leads to a cylinder 34. The conduit 32 also has a branch 40 that leads to the feed gate of the cavity, which can also be opened and closed by the spool valve 30. Each spool valve 30 is actuated by a conventional slider 42 which acts on the valve spool to move it axially towards and away from the cavity.

The spool valve is shown in different positions in Figures 2 and 3. The spool 44 has an enlarged head at its lower end, as viewed, which is engaged by the actuating slider 42. Along is length, the spool 44 has an annular groove 48 which, when the feed gate is closed as shown in Figure 2, is aligned with the runner 28 and the conduit 32. In this position of the valve spool 44, the melt can flow around the spool 44 and along the groove to pass from the runner 28 into the conduit 32. In this position of the spool 44, a land of the spool 44 blocks the branch 40 while the tapered end of the spool 44 blocks the feed gate so that no molten plastics material can enter the mould cavity.

When moved by the slider 42 to the position shown in Figure 3, on the other hand, the spool 44 blocks off the runner 28 and the conduit 32 so that no flow can occur between them. However, the plastics material from the branch 40 can enter into the mould cavity by flowing along axially extending open grooves 46 in the spool 44 that extend to the open feed gate.

The cylinder 34 has its axis parallel to the direction of movement of the platen 12 and contains a piston 37 having a piston rod 38 extending in the same direction towards the moving mould part 18. A stop collar 36 is screwed into the end of the cylinder from which the piston rod projects. The stop collar 36 acts as a guide for the piston rod and also as an adjustable stop by which the stroke of the piston can be limited to adjust the dose metered during each injection cycle.

In operation, while the spool valve 30 closes the feed gate, the feed screw is operate to inject the melt by way of the passage 26 of the bulkhead 10 into the passage 24 of the heated block 22. The melt flows along the runner 28 and through the conduit 32 into the cylinder 34, forcing the piston upwards against its stop collar 36 when the cylinder is full to its maximum capacity. With the piston in this position, the cylinder offers significant back pressure so that the flow of the melt is stopped along the runner 28 and thereby diverted as necessary to any other runner leading to a cylinder that has not yet been filled to its maximum capacity. In this way, the cylinders 34 are all filled with melt during the periods of the operating cycle that the feed gates are closed.

As the mould is being closed, the feed gates are opened by operation of the sliders 42. As earlier described, the spools 44 will now isolate the conduits 32 from their runners 28 and instead connect the branches 40 to the feed gate of the cavity. The closure of the mould brings the mould part 18 into contact with the piston rods 38 and the pistons 37 are thus moved down from the position shown on the left hand side in Figure 1 to that shown on the right in the same figure. This expels from the cylinder 44 the precisely metered dose of the melt stored in the cylinder 34 and this dose now travels along the conduit 32 and the branch 40 and through the open feed gate into the associated mould cavity. Precise setting of the dose can be effected by suitable adjustment of the position of the stop collar 36.

The illustrated embodiment shows cylinders having pistons that are actuated by the moving mould part 18 but this is not essential to the invention. It would be alternatively possible to use other forms of actuators, such as hydraulic, pneumatic or electromechanical actuators are used. In such a case, it is not necessary for the axes of the cylinders 34 to be parallel to the direction of relative movement of the mould parts 14 and 18.

Though it is convenient to construct the feed gate so that it acts as a spool valve controlling the flow of the melt into the cylinder, this is not essential. One could instead use a non-return valve which at all times only allows the melt to flow along the runner 28 in the direction from the screw to the cylinder 34.

In the present invention, the mould is a multi-impression mould having many cavities. In the absence of back pressure, it would conventionally be impossible to deliver the correct dose of the melt to each cavity from a common feed screw.

It will be appreciated by the person skilled in the art that various other modifications may be made to the illustrated and described metering device without departing from the scope of the invention as set out in the appended claims. For example, while a linearly reciprocating piston has been shown, it would be alternatively possible to have a variable volume working chamber defined by a vane movable within an arcuate slot.

## Claims

1. A metering device for use in a plastics moulding machine having mould cavities that are opened and closed by means of relatively movable platens and a means for feeding a plastics melt into the cavities, the device comprising a heated block (22) to be interposed between the feeding means (26) and the mould cavity (16), a cylinder (34) formed in the block (22) for each of the cavities, a single-acting piston (37) reciprocably mounted in each cylinder (34), first passages (28,32) formed in the block (22) to connect the cylinders (34) to the feeding means (26), second passages (32,40) formed in the block (22) to connect each cylinder (34) to the associated mould cavity (16), and valves (30) in said passages (28,32,40) for enabling the cylinders (34) first to be filled with the desired dose of the plastics melt by the feeding means (26) without the melt entering the mould cavities (16) and for subsequently enabling the desired doses of plastics melt when ejected from the cylinders (34) by the pistons (37) to flow from the cylinders (34) to the respective mould cavities (16) without being returned to the feeding means (26), **characterised in that** each piston is displaceable within the associated cylinder (34) by means of a respective piston rod (38) that protrudes from the heated block (22) and **in that** an adjustable stop (36) is provided for limiting the stroke of each piston (37) to enable the quantity of the plastics melt injected into each cavity to be set independently of the other cavities.

2. A metering device as claimed in claim 1, wherein hydraulic, pneumatic or electromechanical actuators are provided to act on the piston rods (38) to advance the respective pistons (37) into their cylinders (34).

3. A metering device as claimed in claim 1 or 2, wherein, the valves are constituted by spool valves (30), each spool (44) having a first position that allows communication only between the associated cylinder (34) and the feeding means (26) and a second position that allows communication only between that cylinder (34) and its associated mould cavity (16).

4. A metering device as claimed in claim 1 or 2, wherein the valves include non-return valves which only allow the melt to flow in the direction from the feeding means (26) to the associated the cylinder (34).

## Patentansprüche

1. Eine Dosier- oder Meßvorrichtung zum Gebrauch in einer Kunststoff-Formgebungsmaschine oder -Spritzgießmaschine, die Formhöhlen aufweist die mittels relativ beweglicher Aufspannplatten geöffnet und geschlossen werden, und Vorrichtungen um eine Plastikschmelze in die Hohlräume zu speisen, wobei die Vorrichtung einen beheizten Block (22) umfaßt, der zwischen die Speisevorrichtung (26) und die Formhöhle (16) einzuschieben ist; einen in dem Block (22) gebildeten Zylinder (34) für jeden der Hohlräume; einen in jedem Zylinder (34) hinund herlaufend montierten, einfachwirkenden Kolben (37); in dem Block (22) gebildete erste Durchgänge (28, 32), um die Zylinder (34) mit der Speisevorrichtung (26) zu verbinden; in dem Block (22) gebildete zweite Durchgänge (32, 40), um jeden Zylinder (34) mit der zugehörigen Formenhöhle (16) zu verbinden; und Ventile (30) in diesen ersten Durchgängen (28, 32, 40), um die Zylinder (34) zu befähigen zuerst durch die Speisevorrichtung (26) mit der gewünschten Dosis an Kunststoffschmelze gefüllt zu werden, ohne daß die Schmelze in die Formhöhlen (16) eintritt; und um die gewünschten Dosen der Kunststoffschmelze - wenn durch die Kolben (37) aus den Zylindern (34) ausgestoßen - nachfolgend zu befähigen von den Zylindern (34) zu den entsprechenden Formhöhlen (16) zu strömen, ohne zu der Speisevorrichtung (26) zurückgeführt zu werden; **dadurch gekennzeichnet daß** jeder Kolben innerhalb des zugehörigen Zylinders (34) mittels einer entsprechenden Kolbenstange (38) zu verdrängen ist, die aus dem geheizten Block (22) herausragt; und dadurch daß ein einstellbarer Anschlag (36) bereitgestellt wird, um den Hub jedes Kolbens (37) zu beschränken; um es der in jeden Hohlraum eingespritzten Menge der Kunststoffschmelze zu erlauben, unabhängig von den anderen Hohlräumen eingestellt zu werden.

2. Eine Dosier- oder Meßvorrichtung wie in Anspruch 1 beansprucht, in der hydraulische, pneumatische oder elektromechanische Stellglieder bereitgestellt werden um auf die Kolbenstangen (38) zu wirken, um die entsprechenden Kolben (37) in ihren Zylindern (34) vorzutreiben.

3. Eine Dosier- oder Meßvorrichtung wie in Anspruch 1 oder 2 beansprucht, in dem die Ventile aus Spulenventilen (30) bestehen, und worin jede Spule (44) eine erste Stellung aufweist, die Kommunikation nur zwischen dem zugehörigen Zylinder (34) und der Speisevorrichtung (26) erlaubt; und eine zweite Stellung, die Kommunikation nur zwischen diesem Zylinder (34) und ihrer zugehörigen Formenhöhle (16) erlaubt.

4. Eine Dosier- oder Meßvorrichtung wie in Anspruch 1 oder 2 beansprucht, in der die Ventile Rückschlagventile einschließen, welche es der Schmelze nur erlauben in Richtung von der Speisevorrichtung (26) zu dem zugehörigen der Zylinder (34) zu strömen.

## Revendications

1. Un dispositif de dosage pour usage dans une machine à mouler le plastique comprenant des cavités à mouler ouvertes et fermées au moyen de plateaux porte - moule relativement mobiles et un dispositif pour débiter un matériau plastique fondu dans les cavités, le dispositif comprenant un bloc de chauffage (22) devant être interposé entre le dispositif de débit (26) et la cavité (16), un cylindre (34) formé dans le bloc (22) pour chacune des cavités, un piston (37) à simple action monté pour mouvement alternatif dans chaque cylindre (34), des premiers passages (28, 32) formés dans le bloc (22) pour coupler les cylindres (34) avec le dispositif de débit (26), des seconds passages (32, 40) dans le bloc (22) pour coupler chaque cylindre (34) avec la cavité à mouler associée (16) et des vannes (30) dans les passages (28, 32, 40) pour permettre en premier lieu de remplir les cylindres (34) avec la dose de matériau plastique fondu souhaitée au moyen du dispositif de débit (26) sans que le matériau plastique fondu ne pénètre dans les cavités à mouler (16) puis pour permettre aux doses de matériau plastique fondu souhaitées de s'écouler depuis les cylindres (34) vers les cavités à mouler respectives (16) sans être retournées vers le dispositif de débit (26), lorsqu'elles sont éjectées des cylindres (34) par les pistons (37), **caractérisé en ce que** chaque piston est déplaçable à l'intérieur du cylindre associé (34) au moyen d'une bielle de piston (38) respective dépassant du bloc de chauffage (22) et **en ce qu'**une cale ajustable (36) est fournie afin de limiter la course de chaque piston (37) pour permettre l'ajustement de la quantité de matériau plastique fondu injecté dans chaque cavité indépendamment des autres cavités.

2. Un dispositif de dosage selon la revendication 1, dans lequel des actionneurs hydrauliques, pneumatiques ou électromécaniques sont fournis pour agir sur les bielles de pistons (38) afin d'avancer les pistons (37) respectifs dans leurs cylindres (34).

3. Un dispositif de dosage selon la revendication 1 ou 2, dans lequel les vannes sont constituées par des distributeurs à robinet cylindrique (30), chaque robinet cylindrique (44) comprenant une première position permettant une communication uniquement entre le cylindre associé (34) et le dispositif de débit (26) et une deuxième position permettant une communication uniquement entre ce cylindre (34) et sa cavité à mouler associée (16).

4. Un dispositif de dosage selon la revendication 1 ou 2, dans lequel les vannes comprennent des clapets de retenue ne permettant au matériau fondu de s'écouler que selon la direction du dispositif de débit (26) vers le cylindre associé (34).
